# EUROPÄISCHE PATENTANMELDUNG

(11) **EP 2 538 627 A1**
(43) Veröffentlichungstag der Anmeldung: **26.12.2012**
(21) Anmeldenummer: 11170711.3
(22) Anmeldetag: 21.06.2011
(51) Int. Cl.: H04L 29/06, H04L 12/22

(54) **Verfahren zum Betreiben eines Engineering-Systems mit Benutzeridentifikation und Vorrichtung**

(71) Anmelder: SIEMENS AKTIENGESELLSCHAFT, 80333 München (DE)
(72) Erfinder: Kohler, Benjamin, 90409 Nürnberg (DE); Riedl, Wolfgang, 90459 Nürnberg (DE); Rosenberg, Jens Ansgar, 90459 Nürnberg (DE); Wittig, Sebastian, 90522 Oberasbach (DE)

(57) **Zusammenfassung**

Das Nutzen eines Engineeringsystems in einem Datennetz soll vereinfacht werden. Daher wird ein Verfahren zum Betreiben eines Engineeringsystems vorgeschlagen, das zum Projektierung und in Betriebnehmen einer automatisierten Vorrichtung ausgebildet und an ein Datennetz angebunden ist, wobei das Datennetz eine Benutzeridentifikationseinrichtung aufweist. Eine Benutzeridentifikationsinformation wird in die Benutzeridentifikationseinrichtung eingegeben (4). Anhand der Benutzeridentifikationsinformation werden Rechte betreffend das Datennetz gesteuert. Außerdem werden mit dieser Benutzeridentifikationsinformation Rechte betreffend einen Zugriff (6) des Engineeringsystems auf ein Automatisierungsprogramm in Abhängigkeit von der Benutzeridentifikationsinformation gesteuert.

## Beschreibung

Die vorliegende Erfindung betrifft ein Verfahren zum Betreiben eines Engineeringsystems, das zum Projektieren und Inbetriebnehmen einer automatisierten Vorrichtung ausgebildet und an ein Datennetz angebunden ist, wobei das Datennetz eine Benutzeridentifikationseinrichtung aufweist. Das Verfahren besitzt die Schritte des Eingebens von Benutzeridentifikationsinformation in die Benutzeridentifikationseinrichtung und des Steuerns von Rechten betreffend das Datennetz anhand der Benutzeridentifikationsinformation. Darüber hinaus betrifft die vorliegende Erfindung eine Datenverarbeitungsanordnung mit einem Engineeringsystem, das an ein Datennetz angebunden ist.

Ein Engineeringsystem wird bei der Erstellung von Automatisierungslösungen zur Konfiguration der Hardware und der Kommunikation, zur Parametrierung von Feldgeräten und Antrieben und zur Programmierung von Controllern verwendet. Das Ergebnis dieser Aktivitäten wird im Automatisierungsprojekt bzw. Automatisierungsprogramm gespeichert. Für den Hersteller einer Automatisierungslösung bedeutet das, dass das Automatisierungsprojekt auch viel herstellereigenes Know-How enthalten kann. Um wettbewerbsfähig zu bleiben, muss der Hersteller sicherstellen, dass auf dieses Know-How nicht von unbefugter Seite zugegriffen werden kann. Allerdings darf der Schutz des Know-How die Erstellung der Automatisierungslösung nicht behindern, da sonst der Zeitaufwand und die Kosten steigen würden.

Es gibt eine Reihe von Szenarien, bei denen der Hersteller sich nicht darauf beschränken kann, das Automatisierungsprojekt an einem für Unbefugte nicht zugänglichen Ort abzulegen. Beispiele dafür sind der Einsatz externer Mitarbeiter, die an der Erstellung der Automatisierungslösung mitwirken, oder Kollaborationsszenarien, bei denen der Hersteller mit anderen Partnern gemeinsam an einem Automatisierungsprojekt arbeitet.

Um Daten vor unbefugtem Zugriff zu schützen, verwendet man Verschlüsselungstechnologien, die im Rahmen des heutigen Kenntnisstandes als sicher gelten. So bieten auch Engineeringsysteme Schutzmechanismen an, mit deren Hilfe bestimmte Daten (z. B. Programmbausteine) im Automatisierungsprojekt verschlüsselt abgelegt werden. Dabei wird zum Ver- und Entschlüsseln ein kryptographischer Schlüssel verwendet, der wiederum durch ein vom Anwender vergebenes Passwort geschützt bzw. verschlüsselt wird.

Die Verwendung von Passwörtern bringt eine Reihe von Problemen mit sich:
i) Es muss sichergestellt werden, dass ein Passwort nicht in unbefugte Hände gerät, da sonst eine Entschlüsselung der geschützten Daten möglich wäre.
ii) Es muss sichergestellt werden, dass befugte Personen das Passwort kennen oder Zugriff darauf haben, damit sie auf die Daten zugreifen können.
iii) Es muss sichergestellt werden, dass das Passwort nicht verloren geht, da ein Zugriff auf die Daten ohne Passwort nicht mehr möglich ist.

Es ist bekannt, dass Anwender Daten im Automatisierungsprojekt dadurch schützen, dass sie, wie oben beschrieben, ein Passwort für die Verschlüsselung der Daten im Engineeringsystem eingeben. Insbesondere generiert das Engineeringsystem kryptographische Schlüssel zur Ver- und Entschlüsselung der Daten. Das eingegebene Passwort wird dann dazu verwendet, um die generierten Schlüssel zu verschlüsseln. Die verschlüsselten Schlüssel werden dann im Automatisierungsprojekt abgelegt. Zum Entschlüsseln der Daten muss wiederum das Passwort eingegeben werden, mit dessen Hilfe der für die Entschlüsselung benötigte Schlüssel wiederum entschlüsselt werden kann.

Für die Sicherung und Verwaltung des Passworts bietet das Engineeringsystem keine Unterstützung und es obliegt dem Anwender, die oben angeführten Probleme zu lösen. Im Folgenden werden dazu drei mögliche Varianten beschrieben:
1. Definition eines firmenweiten "Standardpassworts", das stets gleich ist und das alle Mitarbeiter kennen. Damit ist zunächst sichergestellt, dass das Passwort nicht verloren geht. Probleme ergeben sich aus dem hohen Bekanntheitsgrad des Passworts, sodass nicht sichergestellt werden kann, dass das Passwort nicht schließlich doch über den Kreis der befugten Mitarbeiter hinaus bekannt wird.
2. Benennung einzelner Mitarbeiter, die das Passwort kennen. Diese Mitarbeiter werden immer herangeholt, wenn Daten zu ver- bzw. entschlüsseln sind. Aus diesem Vorgehen ergibt sich das Problem, dass nur sehr aufwändig sichergestellt werden kann, dass immer dann einer dieser Mitarbeiter verfügbar ist, wenn auf die verschlüsselten Daten zugegriffen werden soll.
3. Bearbeiter von einzelnen Objekten im Automatisierungsprojekt vergeben die Passwörter selbstständig. In vielen Fällen wird ein bestimmtes Objekt nur von einem einzelnen oder nur wenigen Bearbeitern modifiziert oder benutzt, sodass es ausreicht, dass nur die betroffenen Bearbeiter das Passwort kennen müssen - ggf. muss ein Bearbeiter wissen, wer über das Passwort zum Entschlüsseln eines Objekts Bescheid weiß und dieses dann von ihm erfragen. Probleme ergeben sich hier daraus, dass zum einen sichergestellt sein muss, dass die verwendeten Passwörter auch langfristig zur Verfügung stehen müssen. Problematisch ist außerdem, dass es zu Verzögerungen kommt, wenn ein Bearbeiter, der das Passwort noch nicht kennt, auf ein verschlüsseltes Objekt zugreifen muss. Darüber hinaus ist unklar, welcher Personenkreis ein Passwort kennt, und ferner besteht immer die Möglichkeit, dass das Passwort über den befugten Kreis hinaus bekannt wird.

Die Aufgabe der vorliegenden Erfindung besteht darin, für das Erstellen von Automatisierungslösungen eine sichere und einfach realisierbare Umgebung zu realisieren.

Erfindungsgemäß wird diese Aufgabe gelöst durch ein Verfahren zum Betreiben eines Engineeringsystems, das zum Projektieren und Inbetriebnehmen einer automatisierten Vorrichtung ausgebildet und an ein Datennetz angebunden ist, wobei das Datennetz eine Benutzeridentifikationseinrichtung aufweist, durch
- Eingeben von Benutzeridentifikationsinformation in die Benutzeridentifikationseinrichtung und
- Steuern von Rechten betreffend das Datennetz anhand der Benutzeridentifikationsinformation, sowie
- Steuern von Rechten betreffend einen Zugriff des Engineeringsystems auf ein Automatisierungsprogramm in Abhängigkeit von der Benutzeridentifikationsinformation.

Darüber hinaus wird erfindungsgemäß bereitgestellt eine Datenverarbeitungsanordnung mit
- einem Engineeringsystem, das zum Projektieren und Inbetriebnehmen einer automatisierten Vorrichtung ausgebildet ist, und
- einem Datennetz, das eine Benutzeridentifikationseinrichtung und eine Steuereinrichtung aufweist, wobei
- in die Benutzeridentifikationseinrichtung eine Benutzeridentifikationsinformation eingebbar ist, und
- die Steuereinrichtung zum Steuern von Rechten betreffend das Datennetz anhand der Benutzeridentifikationsinformation ausgebildet ist, wobei
- die Steuereinrichtung auch zum Steuern von Rechten betreffend einen Zugriff des Engineeringsystems auf ein Automatisierungsprogramm in Abhängigkeit von der Benutzeridentifikationsinformation ausgebildet ist.

In vorteilhafterweise ist also das Engineeringsystem an ein Datennetz angebunden und zur Autorisierung, ob ein Benutzer ein Automatisierungsprojekt benutzen bzw. verändern darf, wird das Benutzeridentifikationssystem bzw. Login-System oder Anmelde-System des Datennetzes mitgenutzt. Es ist somit nicht notwendig, für das Engineeringsystem ein separates Autorisierungssystem neben demjenigen des Datennetzes vorzusehen.

Vorzugsweise besitzt die Benutzeridentifikationseinrichtung des Datennetzes für die Autorisierung eine Recheneinrichtung, auf der das Engineeringsystem betrieben wird, und das Datennetz oder die Recheneinrichtung einen ersten Speicher, auf dem ein Funktionsbaustein des Automatisierungsprogramms verschlüsselt gespeichert wird. Durch das Verschlüsseln eines Funktionsbausteins des Automatisierungsprogramms kann dieser Funktionsbaustein effizient geschützt werden. Andere Funktionsbausteine hingegen können unverschlüsselt bleiben.

Ferner kann die Benutzeridentifikationseinrichtung einen Server aufweisen, der mit der Recheneinrichtung verbunden und über das Datennetz mit einem zweiten Speicher vernetzt wird. Damit kann in dem Datennetz auf übliche Weise Benutzeridentifikationsinformation hinterlegt werden. Prinzipiell können der erste Speicher und der zweite Speicher in einem einzigen Speichergerät vorgesehen sein.

In einer Ausführungsform werden zum Entschlüsseln und Bereitstellen des Funktionsbausteins folgende Schritte durchgeführt:
a) Anmelden eines Benutzers über die Recheneinrichtung an dem Server durch das Eingeben der Benutzeridentifikationsinformation,
b) Aufrufen des Funktionsbausteins auf der Recheneinrichtung,
c) Lesen des verschlüsselten Funktionsbausteins durch die Recheneinrichtung in dem ersten Speicher,
d) Senden des verschlüsselten Funktionsbausteins von der Recheneinrichtung zu dem Server,
e) Lesen eines Schlüssels, mit dem der Funktionsbaustein verschlüsselt ist, durch den Server in dem zweiten Speicher in Abhängigkeit von der Benutzeridentifikationsinformation,
f) Entschlüsseln des Funktionsbausteins mit dem Schlüssel in dem Server und
g) Rückgeben des entschlüsselten Funktionsbausteins von dem Server zu der Recheneinrichtung

Dabei kann in einer Ausprägung der Server, der die Login-Prozedur erledigt, identisch mit dem Server sein, der die Entschlüsselung des Funktionsbausteins durchführt. In einer anderen Ausprägung erfolgt die Entschlüsselung des Funktionsbausteins in einem zweiten Server, der mit dem ersten Server, der die Login-Prozedur erledigt, datentechnisch verbunden ist, sodass der zweite Server die Benutzeridentifikationsinformation vom ersten Server erfragen kann.

Da die Entschlüsselung in beiden Ausprägungen in einem Server stattfindet, der auf die Benutzeridentifikationsinformation zugreifen kann, muss zum Entschlüsseln des Funktionsbausteins nicht erneut das Passwort eingegeben werden.

Gemäß einer zweiten Ausführungsform werden zum Entschlüsseln und Bereitstellen des Funktionsbausteins folgende Schritte durchgeführt:
a) Anmelden eines Benutzers über die Recheneinrichtung an dem Server durch das Eingeben der Benutzeridentifikationsinformation,
b) Aufrufen des Funktionsbausteins auf der Recheneinrichtung,
c) Lesen des verschlüsselten Funktionsbausteins durch die Recheneinrichtung in dem ersten Speicher,
d) Anfordern eines Schlüssels von dem Server zum Entschlüsseln des verschlüsselten Funktionsbausteins durch die Recheneinrichtung,
e) Lesen eines Schlüssels, mit dem der Funktionsbaustein verschlüsselt ist, durch den Server in dem zweiten Speicher in Abhängigkeit von der Benutzeridentifikationsinformation,
f) Weitergeben des Schlüssels von dem Server zu der Recheneinrichtung und
g) Entschlüsseln des Funktionsbausteins mittels des Schlüssels und Bereitstellen des entschlüsselten Funktionsbausteins in der Recheneinrichtung.

Da hier das Entschlüsseln direkt in der Recheneinrichtung erfolgt muss der Server hier nur den entsprechenden Schlüssel liefern. Dies ist unproblematisch, da sich der Benutzer ordnungsgemäß an dem Server angemeldet hat.

Entsprechend einer dritten Ausführungsform werden zum Entschlüsseln und Bereitstellen des Funktionsbausteins folgende Schritte durchgeführt:
a) Anmelden eines Benutzers über die Recheneinrichtung an dem Server durch das Eingeben der Benutzeridentifikationsinformation einschließlich einer Benutzerkennung und eines Passworts,
b) Speichern des Passworts zu der Benutzerkennung in einem dritten Speicher,
c) Aufrufen des Funktionsbausteins auf der Recheneinrichtung,
d) Lesen des verschlüsselten Funktionsbausteins und eines korrespondierenden mit dem Passwort verschlüsselten Schlüssels durch die Recheneinrichtung in den ersten Speicher,
e) Anfordern des der Benutzerkennung zugeordneten Passworts durch die Recheneinrichtung von dem Server,
f) Lesen des Passworts durch den Server in dem dritten Speicher,
g) Rückgeben des Passworts von dem Server zu der Recheneinrichtung,
h) Entschlüsseln des verschlüsselten Schlüssels mit dem Passwort in der Recheneinrichtung und
i) Entschlüsseln des verschlüsselten Funktionsbausteins durch den entschlüsselten Schlüssel und Bereitstellen des entschlüsselten Funktionsbausteins in der Recheneinrichtung.

Hier ist der Schlüssel zusammen mit dem Automatisierungsprogramm in dem ersten Speicher abgelegt, sodass der Server nur das dem Login zugeordnete Passwort an die Recheneinrichtung zum Entschlüsseln senden muss.

Gemäß einer vierten Ausführungsform werden zum Entschlüsseln und Bereitstellen des Funktionsbausteins folgende Schritte durchgeführt:
a) Anmelden eines Benutzers über die Recheneinrichtung an dem Server durch das Eingeben der Benutzeridentifikationsinformation,
b) Aufrufen des Funktionsbausteins auf der Recheneinrichtung,
c) Lesen des verschlüsselten Funktionsbausteins durch die Recheneinrichtung in dem ersten Speicher,
d) Anfordern eines Schlüssels durch die Recheneinrichtung von dem zweiten Speicher unter Übermittlung der Benutzeridentifikationsinformation,
e) Prüfen einer Leseberechtigung zum Lesen des angeforderten Schlüssels unter Berücksichtigung der Benutzeridentifikationsinformation durch den Server,
f) Bei Leseberechtigung Übertragen des angeforderten Schlüssels von dem zweiten Speicher in die Recheneinrichtung und
g) Entschlüsseln des Funktionsbausteins mittels des Schlüssels und Bereitstellen des entschlüsselten Funktionsbausteins in der Recheneinrichtung

In vorteilhafter Weise greift hier die Recheneinrichtung direkt auf den zweiten Speicher zu, um den Schlüssel zu lesen bzw. anzufordern. Die entsprechende Berechtigung erteilt der Server, der die Login-Daten "kennt".

Bei einer fünften Ausführungsform zum Entschlüsseln und Bereitstellen des Funktionsbausteins werden folgende Schritte durchgeführt:
a) Das Eingeben der Benutzeridentifikationsinformation durch Einführen einer Identifikationskarte in die Recheneinrichtung, wobei auf der Identifikationskarte neben der Benutzeridentifikationsinformation auch ein Schlüssel zum Entschlüsseln des Funktionsbausteins gespeichert ist,
b) Aufrufen des Funktionsbausteins auf der Recheneinrichtung,
c) Lesen des verschlüsselten Funktionsbausteins durch die Recheneinrichtung in dem ersten Speicher,
d) Lesen des Schlüssels von der Identifikationskarte durch die Recheneinrichtung und
e) Entschlüsseln des Funktionsbausteins mittels des Schlüssels und Bereitstellen des entschlüsselten Funktionsbausteins in der Recheneinrichtung.

Hier erfolgt die Identifikation und die Autorisierung, mit dem Engineeringsystem zu arbeiten, mit einer Identifikationskarte, auf der auch ein Schlüssel zum Entschlüsseln des Funktionsbausteins bzw. der Funktionsbausteine abgelegt ist. Der Benutzer muss hier die Identifikationsdaten nicht manuell eingeben.

Die vorliegende Erfindung wird nun anhand der beigefügten Zeichnungen näher erläutert, in denen zeigen:
- FIG 1: ein Strukturdiagramm einer Datenverarbeitungsanordnung mit Engineeringsystem, bei der Entschlüsselungsfunktionen einer IT-Infrastruktur verwendet werden;
- FIG 2: ein Strukturdiagramm einer Datenverarbeitungsanordnung, bei der die Schlüssel durch die IT-Infrastruktur verwaltet werden;
- FIG 3: ein Strukturdiagramm einer Datenverarbeitungsanordnung, bei der das Passwort durch die IT-Infrastruktur verwaltet wird;
- FIG 4: ein Strukturdiagramm einer Datenverarbeitungsanordnung, bei der ein Schlüssel auf einem Netzlaufwerk abgelegt wird und
- FIG 5: ein Strukturdiagramm einer Datenverarbeitungsanordnung, bei der der Schlüssel auf einer Keycard abgelegt wird.

Die nachfolgend näher geschilderten Ausführungsbeispiele stellen bevorzugte Ausführungsformen der vorliegenden Erfindung dar.

Bei fast allen Herstellern von Automatisierungslösungen existiert bereits eine vorhandene IT-Infrastruktur, die den Zugang zu einem Datennetz bzw. zu deren Komponenten regelt und die Rechte für die Nutzung der Komponenten verwaltet. Beispiele für derartige IT-Infrastrukturen sind "Active Directory" (Microsoft), "NIS" (Unix) oder "Kerberos" (Basistechnologie, die auch in Active Directory verwendet wird).

Aufgabe einer derartigen IT-Infrastruktur ist vor allem die Identifikation von Benutzern an ihren Arbeitsplatz-PCs und am Firmennetzwerk sowie die Erteilung, Verwaltung und Durchsetzung von Zugriffsrechten z. B. auf Daten. Anwender identifizieren sich gegenüber der IT-Infrastruktur zumeist durch Angabe eines Login-Namens (Benutzerkennung) und eines dazugehörigen Passworts. Manchmal werden dafür auch Identifikationskarten ("Key-Cards") und PINs oder auch biometrische Verfahren eingesetzt. Häufig bietet eine IT-Infrastruktur auch die Definition von Benutzergruppen an. Diesen Gruppen können Zugriffsrechte ähnlich wie für einzelne Anwender zugewiesen werden. Ein Anwender kann Mitglied einer oder mehrerer Gruppen sein und erhält damit - zusätzlich zu seinen eigenen Rechten - die den jeweiligen Gruppen eingeräumten Zugriffsrechte.

Zur Vereinfachung der Autorisierung für die Benutzung oder Veränderung eines Automatisierungsprogramms bzw. Automatisierungsprojekts durch ein Engineeringsystem erfolgt eine Anbindung des Engineeringsystems an die vorhandene IT-Struktur, sodass deren Mechanismen zur Identifikation, zum Zugriffsschutz aber auch zur Verschlüsselung bzw. Schlüsselerzeugung genutzt werden können. Die Anbindung des Engineeringsystems an die IT-Infrastruktur erfolgt günstiger Weise über ein Softwaremodul im Engineeringsystem. Mit unterschiedlichen Modulen kann die Anbindung an die verschiedenen IT-Infrastrukturen gewährleistet werden. Durch die Modulbildung wird erreicht, dass die Anbindung an die verschiedenen IT-Infrastruktur-Technologien ohne weitere Änderungen innerhalb des Engineeringsystems erfolgen kann.

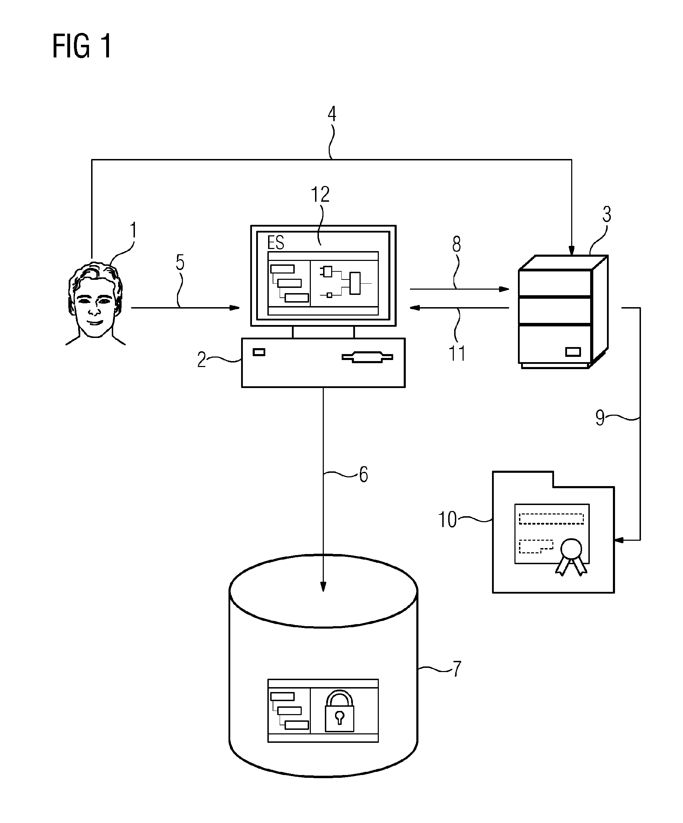

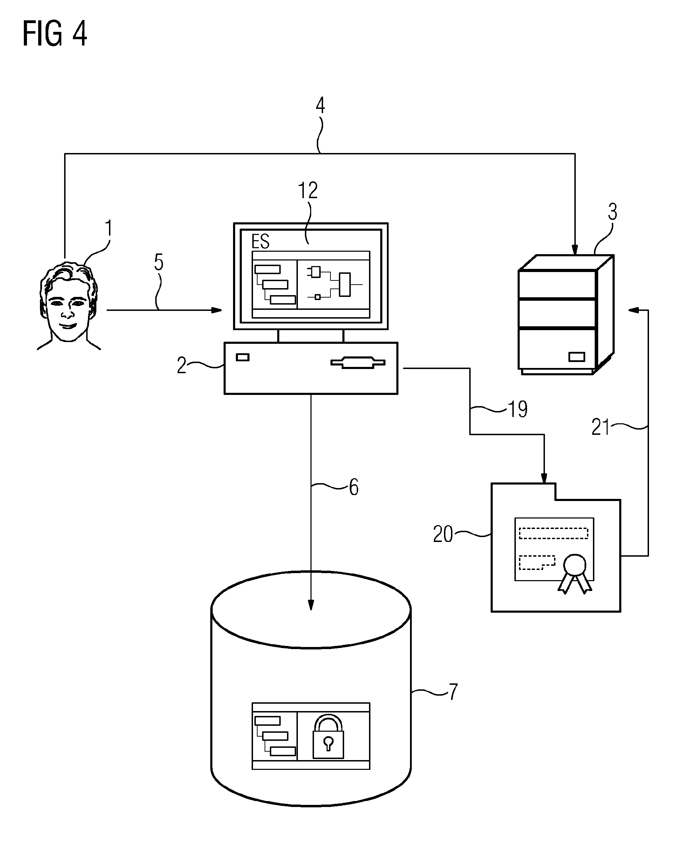

Im Zusammenhang mit den FIG 1 bis FIG 5 werden nun verschiedene Arten beschrieben, wie die Dienste der IT-Infrastruktur verwendet werden können. Welche Art der Nutzung tatsächlich Anwendung findet, hängt zum einen von den tatsächlich von der IT-Infrastruktur angebotenen Funktionalitäten und zum anderen auch von anwenderspezifischen Regelungen und Vorlieben ab. All den beschriebenen Anwendungsfällen ist gemeinsam, dass sich ein Benutzer in der oben geschilderten Weise gegenüber der IT-Infrastruktur identifiziert. Durch die den Benutzer oder seinen Gruppen zugewiesenen Rechten wird festgelegt, auf welche verschlüsselten Daten er im Automatisierungsprojekt Zugriff hat.

Entsprechend dem ersten Ausführungsbeispiel gemäß FIG 1 führt ein Anwender 1 eine übliche Login-Prozedur an seinem Arbeitsplatz-PC 2 aus. Dabei gibt er üblicherweise eine Benutzerkennung und sein Passwort ein. Die Login-Daten werden an einen IT-Infrastruktur-Server 3 weitergereicht und dort verarbeitet. Der Einfachheit halber ist diese Login-Prozedur, d. h. das Anmelden 4, in FIG 1 durch einen Pfeil vom Anwender 1 zum IT-Infrastruktur-Server 3 dargestellt.

Der Arbeitsplatz-PC 2 stellt eine Recheneinrichtung dar, die nicht nur für die Benutzeridentifikation verwendet wird, sondern auf der auch ein Engineeringsystem (ES) implementiert ist. Der Anwender 1 kann das Engineeringsystem auf der Recheneinrichtung beispielsweise zum Projektieren oder Programmieren einer Automatisierungslösung verwenden. Hierzu öffnet er beispielsweise einen Funktionsbaustein des Engineeringsystems. Dieses Öffnen 5 ist in FIG 1 durch einen Pfeil vom Anwender 1 zum Arbeitsplatz-PC 2 symbolisiert. Daraufhin erfolgt ein Lesen 6 des Funktionsbausteins in einem ersten Speicher 7, in dem das Automatisierungsprojekt bzw. -Programm ganz oder teilweise verschlüsselt abgelegt ist. Die Recheneinrichtung 2 schickt dann den verschlüsselten Funktionsbaustein hier an den IT-Infrastruktur-Server 3 zum Entschlüsseln. Bei diesem Senden 8 des Funktionsbausteins erhält der Server 3 auch Benutzeridentifikationsinformation (Benutzerkennung und/oder Passwort). Zusammen mit den Anmeldedaten beim Anmelden 4 und der Benutzeridentifikationsinformation ist der Server dann in der Lage, zu prüfen, ob der Anwender 1 autorisiert ist, den Funktionsbaustein zu öffnen bzw. zu verwenden. Im Falle einer positiven Prüfung erfolgt ein Lesen 9 eines kryptographischen Schlüssels in einem Schlüsselspeicher 10 (zweiter Speicher). Mit diesem kryptographischen Schlüssel wird der Funktionsbaustein in dem Server 3 entschlüsselt. So dann kommt es zu einer Rückgabe 11 des entschlüsselten Funktionsbausteins an die Recheneinrichtung 2. Dort erfolgt dann beispielsweise eine Anzeige 12 des entschlüsselten Funktionsbausteins.

Es werden also somit die Verschlüsselungsfunktionen der IT-Infrastruktur durch das Engineeringsystem genutzt. Das Engineeringsystem führt die Ver- bzw. Entschlüsselung nicht mehr selbst durch, sondern benutzt Funktionen der IT-Infrastruktur. Die Erzeugung und Verwaltung der kryptographischen Schlüssel sowie die Zugangsregelung erfolgt dabei über die Mittel der IT-Infrastruktur.

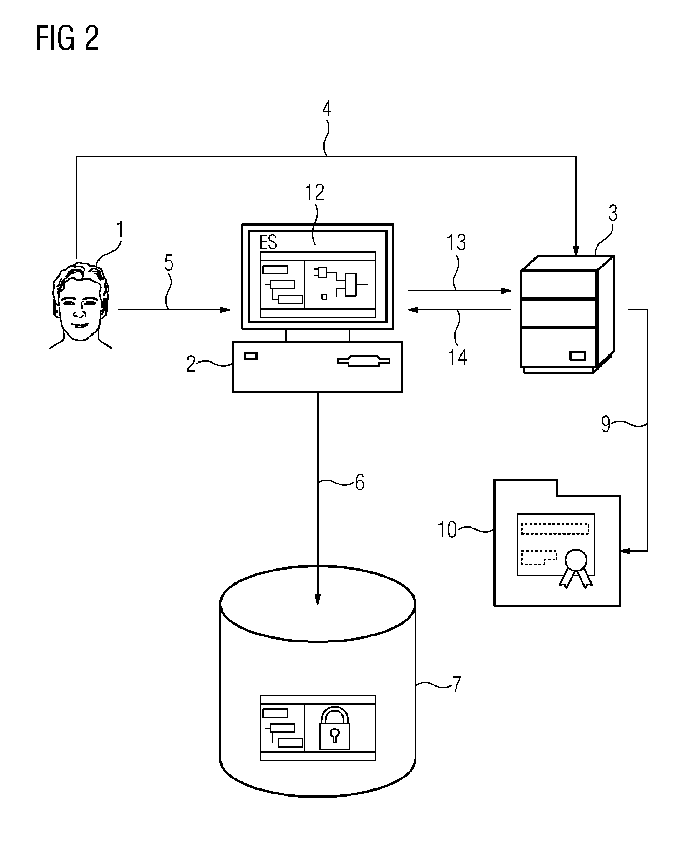

Entsprechend dem zweiten Ausführungsbeispiel von FIG 2 erfolgt das Erzeugen und Verwalten der kryptographischen Schlüssel durch die IT-Infrastruktur. Die Struktur der Datenverarbeitungsanordnung von FIG 2 entspricht im Wesentlichen der von FIG 1. Auch die einzelnen Schritte des Anmeldens 4 des Anwenders bzw. Benutzers 1 über die Recheneinrichtung 2 an dem Server 3 durch das Eingeben der Benutzeridentifikationsinformation, das Aufrufen bzw. Öffnen 5 des Funktionsbausteins auf der Recheneinrichtung 2 und das Lesen 6 des verschlüsselten Funktionsbausteins durch die Recheneinrichtung 2 in dem ersten Speicher 7 entspricht den im ersten Ausführungsbeispiel durchgeführten Schritten. Das Entschlüsseln des verschlüsselten Funktionsbausteins erfolgt hier jedoch nicht in dem Server 3 sondern in der Recheneinrichtung 2. Daher erfolgt in einem anschließenden Schritt ein Anfordern 13 eines Schlüssels von dem Server 3 zum Entschlüsseln des verschlüsselten Funktionsbausteins durch die Recheneinrichtung. Diesem Anfordern 13 folgt wie in dem ersten Ausführungsbeispiel ein Lesen 9 des Schlüssels, mit dem der Funktionsbaustein verschlüsselt ist, durch den Server 3 in dem zweiten Speicher 10 in Abhängigkeit von der Benutzeridentifikationsinformation. Anschließend erfolgt ein Weitergeben 14 des Schlüssels von dem Server 3 zu der Recheneinrichtung 2, sodass schließlich in der Recheneinrichtung 2 ein Entschlüsseln des Funktionsbausteins mittels des Schlüssels und ein entsprechendes Bereitstellen oder Anzeigen 12 des entschlüsselten Funktionsbausteins in der Recheneinrichtung 2 erfolgen kann.

Gemäß diesem zweiten Ausführungsbeispiel erfolgt die Verwaltung und der Zugriffsschutz auf diese Schlüssel durch die IT-Infrastruktur.

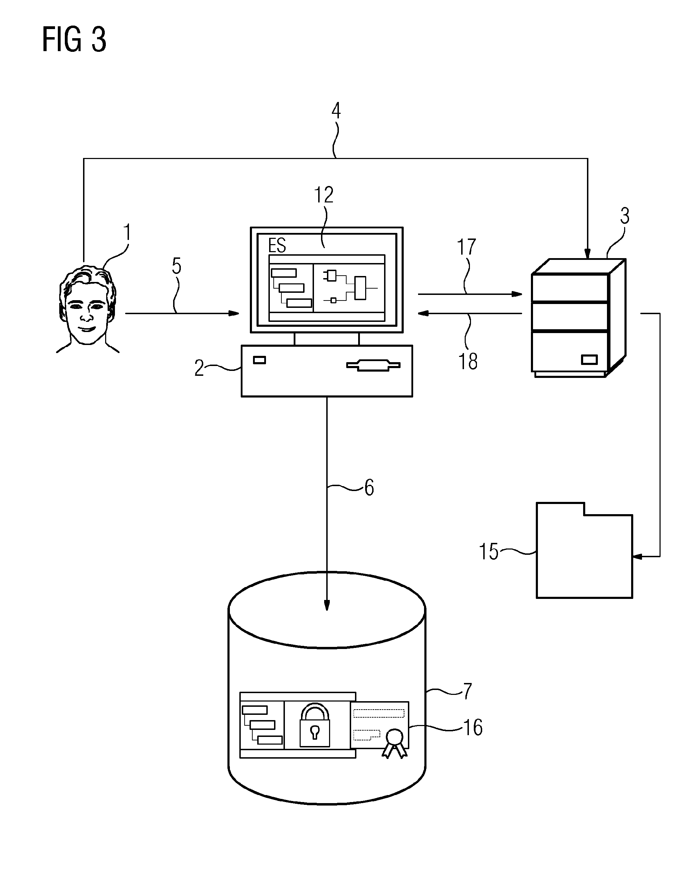

Ein Verfahren bzw. eine Datenverarbeitungsanordnung gemäß einer dritten Ausführungsform der vorliegenden Erfindung ist in FIG 3 schematisch wiedergegeben. Auch hier ist die Datenverarbeitungsanordnung ähnlich derjenigen von FIG 1 oder FIG 2. Es erfolgt auch hier ein Anmelden 4 des Benutzers 1 über die Recheneinrichtung 2 an dem Server 3 durch das Eingeben der Benutzeridentifikationsinformation einschließlich einer Benutzerkennung und eines Passworts. Das Passwort zu der Benutzerkennung wird in einem dritten Speicher 15 gespeichert. Nach dem Aufrufen 5 des Funktionsbausteins auf der Recheneinrichtung 2 erfolgt wiederum das Lesen 6 des verschlüsselten Funktionsbausteins und eines korrespondierenden mit dem Passwort verschlüsselten Schlüssels 16 durch die Recheneinrichtung 2 in dem ersten Speicher 7. Daraufhin erfolgt ein Anfordern 17 des Passworts zu der Benutzerkennung durch die Recheneinrichtung 2 von dem Server 3. Dieser wiederum führt ein Lesen 18 des Passworts in dem dritten Speicher 15 durch. Die Berechtigung hierfür ist aufgrund der Anmeldeprozedur 4 an dem Server 3 gegeben. Anschließend erfolgt also ein Rückgeben 18 des Passworts von dem Server 3 zu der Recheneinrichtung 2. In der Recheneinrichtung 2 wird der verschlüsselte Schlüssel 16 aus dem ersten Speicher 7 mit dem Passwort entschlüsselt. Nun ist in der Recheneinrichtung auch ein Entschlüsseln des verschlüsselten Funktionsbausteins durch den entschlüsselten Schlüssel und ein Anzeigen 12 bzw. Bereitstellen des entschlüsselten Funktionsbausteins möglich.

Es erfolgt hier also ein Verwalten des Passworts durch die IT-Infrastruktur. Das Engineeringsystem legt auf die herkömmliche Art den kryptographischen Schlüssel in verschlüsselter Form im Automatisierungsprojekt ab. Das Passwort für die Verschlüsselung bzw. Entschlüsselung des Schlüssels wird durch die IT-Infrastruktur erzeugt und von ihr verwaltet.

Auch bei einer vierten Ausführungsform ist die Datenverarbeitungsanordnung ähnlich strukturiert wie in den vorhergehenden Ausführungsbeispielen. Entsprechend ähnlich ist auch das Verfahren zum Betreiben des Engineeringsystems. Insbesondere erfolgen das Anmelden 4, das Aufrufen 5 und das Lesen 6 des Funktionsbausteins wie in dem ersten und zweiten Ausführungsbeispiel. Nun jedoch erfolgt in einem vierten Schritt ein Anfordern 19 eines kryptographischen Schlüssels durch die Recheneinrichtung 2 von dem zweiten Speicher oder von einem Netzlaufwerk 20 unter Übermittlung der Benutzeridentifikationsinformation oder Benutzerkennung. Anschließend erfolgt ein Prüfen 21 einer Leseberechtigung zum Lesen des angeforderten Schlüssels unter Berücksichtigung der Benutzeridentifikationsinformation bzw. Benutzerkennung durch den Server 3. Dem Server obliegt also die Rechteverwaltung für die Laufwerke. Besteht eine Leseberechtigung bzw. kann diese erteilt werden, so kann die Recheneinrichtung 2 auf das Netzlaufwerk 20 zugreifen und den kryptographischen Schlüssel lesen. Es erfolgt also dann eine Übertragung des angeforderten Schlüssels von dem zweiten Speicher (Netzlaufwerk) in die Recheneinrichtung. Abschließend wird der Funktionsbaustein in der Recheneinrichtung entschlüsselt, und der entschlüsselte Funktionsbaustein wird in der Recheneinrichtung bereitgestellt bzw. angezeigt.

Es kann somit der kryptographische Schlüssel oder das Passwort auf einem Netzlaufwerk abgelegt werden. Der Schlüssel ist entweder von dem Engineeringsystem oder von einer externen Einheit erzeugt. Ob einem Benutzer die Ver- bzw. Entschlüsselung von geschützten Daten möglich ist, wird durch die Zugriffsrechte für das Netzlaufwerk geregelt. Alternativ kann der kryptographische Schlüssel auf herkömmliche Art in verschlüsselter Form im Automatisierungsprojekt und lediglich das Passwort zur Entschlüsselung des Schlüssels auf dem Netzlaufwerk abgelegt werden.

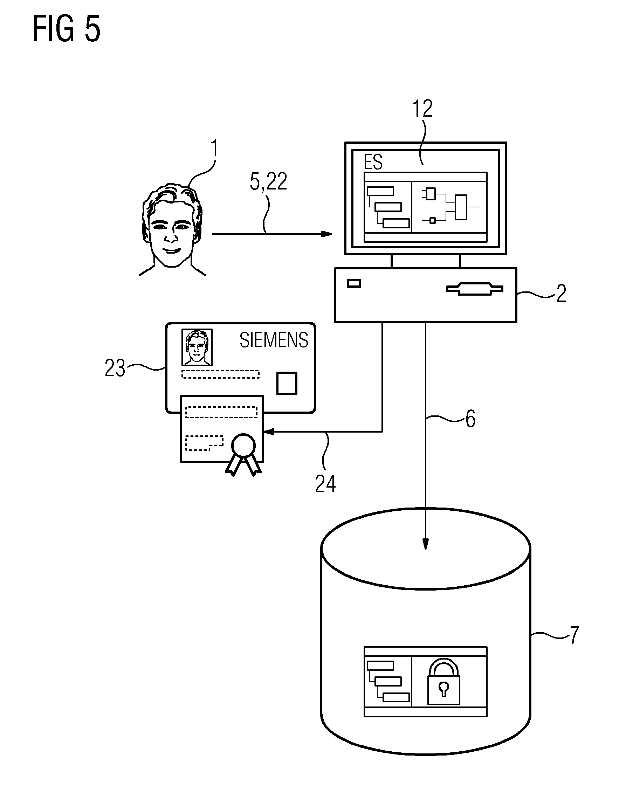

Gemäß einer fünften Ausführungsform erfolgt eine Ablage des kryptographischen Schlüssels oder eines Passworts auf einer Keycard bzw. Identifikationskarte. Die Datenverarbeitungsanordnung umfasst auch hier ein Engineeringsystem und ein Datennetz. In FIG 5 ist jedoch der Übersicht halber als Komponenten des Datennetzes lediglich die Recheneinrichtung 2 und der Speicher 7 dargestellt. Gegebenenfalls ist der Speicher 7 in die Recheneinrichtung 2 integriert. Der Anwender oder Benutzer 1 kann sich hier durch eine Keycard 3 (Identifikationskarte) in das Datennetz einloggen. Es erfolgt hier also ein Eingeben 22 der Benutzeridentifikationsinformation durch Einführen einer Identifikationskarte 23 in die Recheneinrichtung bzw. an ein daran angeschlossenes Lesegerät, wobei auf der Identifikationskarte 23 neben der Benutzeridentifikationsinformation auch ein Schlüssel zum Entschlüsseln des Funktionsbausteins gespeichert ist. Falls nun durch den Anwender 1 ein Aufrufen 5 des Funktionsbausteins auf der Recheneinrichtung 2 erfolgt, wird ein Lesen 6 des verschlüsselten Funktionsbausteins durch die Recheneinrichtung 2 in dem ersten Speicher 7 ausgelöst. Außerdem erfolgt ein Lesen 24 des Schlüssels von der Identifikationskarte 23 durch die Recheneinrichtung 2. Schließlich erfolgt in der Recheneinrichtung 2 ein Entschlüsseln des Funktionsbausteins mittels des Schlüssels und Bereitstellen oder Anzeigen 12 des entschlüsselten Funktionsbausteins in der Recheneinrichtung 2.

Es wird hier also ein vom Engineeringsystem oder extern erzeugter Schlüssel auf einer Keycard 23 des Anwenders 1 abgelegt. Alternativ kann der kryptographische Schlüssel auf herkömmliche Art in verschlüsselter Form im Automatisierungsprojekt abgelegt werden und lediglich das Passwort zur Entschlüsselung des Schlüssels auf der Keycard 23 abgelegt werden. Das Engineeringsystem bietet Mechanismen an, über die Anwender die auf ihren Keycards abgelegten kryptographischen Schlüssel bzw. Passwörter exportieren und wieder importieren und somit untereinander austauschen können.

Bei den oben dargestellten Ausführungsbeispielen wird also der Verschlüsselungsmechanismus im Engineeringsystem geöffnet und es wird damit eine Anbindung und Verwendung externer IT-Mechanismen ermöglicht. Für den einzelnen Anwender ergibt sich der Vorteil, dass er für die Arbeit mit verschlüsselten Daten im Automatisierungsprojekt keine Passwörter auswendig lernen muss. Vielmehr genügt es, sich gegenüber der IT-Infrastruktur zu identifizieren, was üblicherweise sowieso vor der Benutzung eines PC oder von Netzwerkressourcen notwendig ist.

Für mehrere zusammenarbeitende Anwender ergibt sich der Vorteil, dass die Verteilung und Verfügbarmachung von gemeinsam genutzten Passwörtern entfällt.

Für eine Firma ergibt sich der Vorteil, dass das firmeneigene Know-How mit bekannten und bewährten Mitteln der Informationssicherheit geschützt werden kann, wobei Zugangsrechte zentral verwaltet werden können. Schlüssel und Passwörter können dabei auf einfache Weise zentral gesichert und somit vor Verlust geschützt werden. Dadurch dass die Mitarbeiter selbst keinen Zugriff auf Passwörter mehr haben, wird auch die Kompromittierung dieser Passwörter unwahrscheinlicher.

### Bezugszeichenliste

- 1: Anwender
- 2: Arbeitsplatz-PC
- 3: IT-Infrastruktur-Server
- 4: Anmelden
- 5: Öffnen
- 6: Lesen
- 7: Speicher
- 8: Senden
- 9: Lesen
- 10: Schlüsselspeicher
- 11: Rückgabe
- 12: Anzeige
- 13: Anfordern
- 14: Weitergeben
- 15: Speicher
- 16: Schlüssel
- 17: Anfordern
- 18: Rückgeben
- 19: Anfordern
- 20: Netzlaufwerk
- 21: Prüfen
- 22: Eingeben
- 23: Identifikationskarte
- 24: Lesen

## Patentansprüche

1. Verfahren zum Betreiben eines Engineeringsystems, das zum Projektieren und Inbetriebnehmen einer automatisierten Vorrichtung ausgebildet und an ein Datennetz angebunden ist, wobei das Datennetz eine Benutzeridentifikationseinrichtung aufweist, durch
- Eingeben von Benutzeridentifikationsinformation in die Benutzeridentifikationseinrichtung und
- Steuern von Rechten betreffend das Datennetz anhand der Benutzeridentifikationsinformation,
**gekennzeichnet durch**
- Steuern von Rechten betreffend einen Zugriff des Engineeringsystems auf ein Automatisierungsprogramm in Abhängigkeit von der Benutzeridentifikationsinformation.

2. Verfahren nach Anspruch 1, wobei die Benutzeridentifikationseinrichtung eine Recheneinrichtung (2), auf der das Engineeringsystem betrieben wird, und das Datennetz oder die Recheneinrichtung einen ersten Speicher (7), auf dem ein Funktionsbaustein des Automatisierungsprogramms verschlüsselt gespeichert wird, aufweist.

3. Verfahren nach Anspruch 2, wobei die Benutzeridentifikationseinrichtung einen Server (3) aufweist, der mit der Recheneinrichtung (2) verbunden und über das Datennetz mit einem zweiten Speicher (10, 20) vernetzt wird.

4. Verfahren nach Anspruch 3, wobei zum Entschlüsseln und Bereitstellen des Funktionsbausteins folgende Schritte durchgeführt werden:
a) Anmelden (4) eines Benutzers (1) über die Recheneinrichtung (2) an dem Server (3) durch das Eingeben der Benutzeridentifikationsinformation,
b) Aufrufen (5) des Funktionsbausteins auf der Recheneinrichtung (2),
c) Lesen (6) des verschlüsselten Funktionsbausteins durch die Recheneinrichtung in dem ersten Speicher,
d) Senden (8) des verschlüsselten Funktionsbausteins von der Recheneinrichtung zu dem Server,
e) Lesen (9) eines Schlüssels, mit dem der Funktionsbaustein verschlüsselt ist, durch den Server in dem zweiten Speicher (10, 20) in Abhängigkeit von der Benutzeridentifikationsinformation,
f) Entschlüsseln des Funktionsbausteins mit dem Schlüssel in dem Server (3) und
g) Rückgeben (11) des entschlüsselten Funktionsbausteins von dem Server zu der Recheneinrichtung.

5. Verfahren nach Anspruch 3, wobei zum Entschlüsseln und Bereitstellen des Funktionsbausteins folgende Schritte durchgeführt werden:
a) Anmelden (4) eines Benutzers (1) über die Recheneinrichtung (2) an dem Server (3) durch das Eingeben der Benutzeridentifikationsinformation,
b) Aufrufen (5) des Funktionsbausteins auf der Recheneinrichtung,
c) Lesen (6) des verschlüsselten Funktionsbausteins durch die Recheneinrichtung in dem ersten Speicher (7),
d) Anfordern (13) eines Schlüssels von dem Server zum Entschlüsseln des verschlüsselten Funktionsbausteins durch die Recheneinrichtung,
e) Lesen (9) eines Schlüssels, mit dem der Funktionsbaustein verschlüsselt ist, durch den Server in dem zweiten Speicher (10) in Abhängigkeit von der Benutzeridentifikationsinformation,
f) Weitergeben (14) des Schlüssels von dem Server zu der Recheneinrichtung und
g) Entschlüsseln des Funktionsbausteins mittels des Schlüssels und Bereitstellen des entschlüsselten Funktionsbausteins in der Recheneinrichtung (2).

6. Verfahren nach Anspruch 3, wobei zum Entschlüsseln und Bereitstellen des Funktionsbausteins folgende Schritte durchgeführt werden:
a) Anmelden (4) eines Benutzers (1) über die Recheneinrichtung (2) an dem Server (3) durch das Eingeben der Benutzeridentifikationsinformation einschließlich einer Benutzerkennung und eines Passworts,
b) Speichern des Passworts zu der Benutzerkennung in einem dritten Speicher (15),
c) Aufrufen (5) des Funktionsbausteins auf der Recheneinrichtung,
d) Lesen (6) des verschlüsselten Funktionsbausteins und eines korrespondierenden mit dem Passwort verschlüsselten Schlüssels durch die Recheneinrichtung in den ersten Speicher (7),
e) Anfordern (17) des der Benutzerkennung zugeordneten Passworts durch die Recheneinrichtung von dem Server,
f) Lesen des Passworts durch den Server in dem dritten Speicher (15),
g) Rückgeben (18) des Passworts von dem Server zu der Recheneinrichtung,
h) Entschlüsseln des verschlüsselten Schlüssels mit dem Passwort in der Recheneinrichtung und
i) Entschlüsseln des verschlüsselten Funktionsbausteins durch den entschlüsselten Schlüssel und Bereitstellen des entschlüsselten Funktionsbausteins in der Recheneinrichtung (2).

7. Verfahren nach Anspruch 3, wobei zum Entschlüsseln und Bereitstellen des Funktionsbausteins folgende Schritte durchgeführt werden:
a) Anmelden (4) eines Benutzers (1) über die Recheneinrichtung (2) an dem Server (3) durch das Eingeben der Benutzeridentifikationsinformation,
b) Aufrufen (5) des Funktionsbausteins auf der Recheneinrichtung,
c) Lesen (6) des verschlüsselten Funktionsbausteins durch die Recheneinrichtung in dem ersten Speicher (7),
d) Anfordern (19) eines Schlüssels durch die Recheneinrichtung von dem zweiten Speicher (10, 20) unter Übermittlung der Benutzeridentifikationsinformation,
e) Prüfen (21) einer Leseberechtigung zum Lesen des angeforderten Schlüssels unter Berücksichtigung der Benutzeridentifikationsinformation durch den Server,
f) Bei Leseberechtigung Übertragen des angeforderten Schlüssels von dem zweiten Speicher (10, 20) in die Recheneinrichtung (2) und
g) Entschlüsseln des Funktionsbausteins mittels des Schlüssels und Bereitstellen des entschlüsselten Funktionsbausteins in der Recheneinrichtung.

8. Verfahren nach Anspruch 3, wobei zum Entschlüsseln und Bereitstellen des Funktionsbausteins folgende Schritte durchgeführt werden:
a) Das Eingeben (22) der Benutzeridentifikationsinformation durch Einführen einer Identifikationskarte (23) in die Recheneinrichtung (2), wobei auf der Identifikationskarte neben der Benutzeridentifikationsinformation auch ein Schlüssel zum Entschlüsseln des Funktionsbausteins gespeichert ist,
b) Aufrufen (5) des Funktionsbausteins auf der Recheneinrichtung,
c) Lesen (6) des verschlüsselten Funktionsbausteins durch die Recheneinrichtung in dem ersten Speicher (7),
d) Lesen (24) des Schlüssels von der Identifikationskarte (23) durch die Recheneinrichtung (2) und
e) Entschlüsseln des Funktionsbausteins mittels des Schlüssels und Bereitstellen des entschlüsselten Funktionsbausteins in der Recheneinrichtung.

9. Datenverarbeitungsanordnung mit
- einem Engineeringsystem, das zum Projektieren und Inbetriebnehmen einer automatisierten Vorrichtung ausgebildet ist, und
- einem Datennetz, das eine Benutzeridentifikationseinrichtung und eine Steuereinrichtung aufweist, wobei
- in die Benutzeridentifikationseinrichtung eine Benutzeridentifikationsinformation eingebbar ist, und
- die Steuereinrichtung zum Steuern von Rechten betreffend das Datennetz anhand der Benutzeridentifikationsinformation ausgebildet ist,
**dadurch gekennzeichnet, dass**
- die Steuereinrichtung auch zum Steuern von Rechten betreffend einen Zugriff des Engineeringsystems auf ein Automatisierungsprogramm in Abhängigkeit von der Benutzeridentifikationsinformation ausgebildet ist.
